Europäisches Patentamt

European Patent Office

Office européen des brevets

(11) Publication number: **0 469 285 A1**

# EUROPEAN PATENT APPLICATION

(21) Application number: **91110356.2**

(22) Date of filing: **24.06.91**

(51) Int. Cl.5: **C10G 3/00, C10L 1/02, C07C 43/04, C07C 41/06**

(30) Priority: **30.07.90 US 559739**

(43) Date of publication of application:
**05.02.92 Bulletin 92/06**

(84) Designated Contracting States:
**BE DE FR GB IT NL**

(71) Applicant: **MOBIL OIL CORPORATION**
**3225 Gallows Road**
**Fairfax, Virginia 22037-0001(US)**

(72) Inventor: **Harandi, Mohsen Nadimi**
**12 Catbird Court, Lawrenceville**
**Mercer County, New Jersey 08648(US)**
Inventor: **Owen, Hartley**
**5 Riverview Terrace, Belle Mead**
**Somerset County, New Jersey 08502(US)**

(74) Representative: **Kador & Partner**
**Corneliusstrasse 15**
**W-8000 München 5(DE)**

(54) **Integrated process for conversion of C3-C4 paraffin in the production of tertiary alkyl ether and gasoline.**

(57) An integrated process that converts $C_3$-$C_4$ paraffins contained in the light hydrocarbon feedstream of an etherification process for the production of tertiary alkyl ether from alkanol and iso-olefins. Paraffin conversion is accomplished by carrying out the conversion of unreacted alkanol and $C_4$- hydrocarbon from the etherification under high pressure using a high activity zeolite catalyst. The conversion of paraffin is accomplished without the production of significant quantities of methane.

FIG. 2

EP 0 469 285 A1

This invention relates to an integrated process for the production of gasoline boiling range hydrocarbons containing alkyl tertiary alkyl ethers.

In one embodiment the invention relates to a process integration for converting propane and butane in an iso-olefin rich feedstock to higher hydrocarbons and high octane gasoline rich in tertiary alkyl ether, such as the conversion of $C_3$+ feedstock to $C_5$+ gasoline containing methyl tertiary butyl ether (MTBE) and tertiary amyl ether (TAME).

It is known that isobutylene and other isoalkenes produced by hydrocarbon cracking may be reacted with methanol and other $C_1$-$C_4$ lower aliphatic alkanols over an acidic catalyst to provide methyl tertiary butyl ether (MTBE) or the like. It is also known that asymmetrical ethers having the formula $(CH_3)_3$C-O-R, where R is a $C_1$-$C_4$ alkyl radical, are particularly useful as octane improvers for liquid fuels, especially gasoline.

MTBE, ethyl t-butyl ether (ETBE), tert-amyl methyl ether (TAME) and isopropyl t-butyl ether (IPTBE) are known to be high octane ethers. J.D. Chase, et al, Oil and Gas Journal, April 9, 1979, discuss the advantages achieved by using such materials to enhance gasoline octane. The octane blending number of MTBE when 10% is added to a base fuel (R+O = 91) is about 120. For a fuel with a low motor rating (M+O = 83) octane, the blending value of MTBE at the 10% level is about 103. On the other hand, for an (R+O) of 95 octane fuel, the blending value of 10% MTBE is about 114.

In recent years, a major development within the petroleum industry has been the discovery of the special catalytic capabilities of zeolite catalysts based upon medium pore size shape selective metallosilicates. Depending upon conditions (space velocity, temperature and pressure) lower oxygenates such as methanol can be converted in the presence of such catalysts to olefins which can oligomerize to provide gasoline or distillate, or be converted further to produce aromatics.

It has been discovered that under certain conditions substantial improvements in the field of alkyl tert-alkyl ether production can be realized by a combination or integration of etherification and hydrocarbon conversion processes based upon such catalysis. US-A-4,788,365, 4,826,507 and 4,854,939 disclose production of MTBE and TAME wherein unreacted alcohol and light olefin components from etherification are converted to higher hydrocarbons in contact with zeolite catalyst. In these processes the etherification reaction is carried out using $C_4$+ hydrocarbon feedstream rich in iso-olefins with the subsequent oligomerization of unreacted light olefins. Feedstreams comprising $C_3$ hydrocarbons are not employed and conversion of light paraffins to higher hydrocarbons is not experienced.

US-A-4,754,100 discloses a process for converting propane to higher hydrocarbons such as butanes and $C_5$ aliphatics over zeolite catalyst by adding a monoolefin to the propane feed. In US Patent Application Serial No. 210,177, filed June 20, 1988 by C. Sorensen et al, the conversion of normal butane to propane and gasoline over zeolite catalyst is described. Both of these processes for converting light paraffins employing zeolite catalysis are carried out under conditions of high severity at high pressure.

According to the present invention a continuous process for converting a feedstock, comprising lower aliphatic alkanol and $C_3$+, $C_4$ or $C_4$+ aliphatic hydrocarbon containing alkane and alkene and rich in iso-olefins, to alkyl tertiary-alkyl ethers and $C_5$+ gasoline boiling range hydrocarbons comprises contacting the alkanol and the aliphatic hydrocarbon under etherification conditions with an acid etherification catalyst to produce an etherification effluent comprising an overhead stream containing unreacted alkanol and $C_4$- aliphatic hydrocarbons and a liquid product stream containing $C_5$+ alkyl tertiary-alkyl ether; and subjecting said overhead stream to high severity contacting with acidic, medium pore metallosilicate catalyst at a temperature of 200 to 427°C and a pressure above 3400 kPa, to convert alkanol, alkane and alkene therein to $C_5$+ gasoline boiling range hydrocarbons with no substantial formation of methane. The high severity contacting is preferably carried out at a temperature of 200°C to 370°C and a weight hourly space velocity of 0.1 to 30 and in the essential absence of hydrogen.

In one advantageous embodiment the overhead stream is subjected to a preliminary low severity contacting with acidic, medium pore metallosilicate catalyst to produce $C_5$+ gasoline boiling range hydrocarbons and unreacted $C_4$- aliphatic hydrocarbons which latter are then subjected to said high severity contacting. The high severity contacting is preferably carried out at a temperature of 200°C to 427°C.

In a further advantageous embodiment the overhead stream is subjected to a preliminary low severity contacting with acidic, medium pore metallosilicate catalyst to produce $C_5$+ gasoline boiling range hydrocarbons and unreacted $C_4$- aliphatic hydrocarbons which latter, together with further lower aliphatic alkanol, are contacted with a further acid etherification catalyst under etherification conditions to provide a further liquid product stream containing $C_5$+ alkyl tertiary-alkyl ether and an overhead stream containing unreacted alkanol and $C_4$- aliphatic hydrocarbons which is subjected to said high severity contacting. The high severity contacting is preferably carried out at a temperature of 200°C to 427°C.

The lower aliphatic alkanol may comprise methanol, ethanol, 1-propanol, isopropanol, 1-butanol and/or 2-butanol. The medium pore metallosilicate is preferably a zeolite having the structure of ZSM-5 or zeolite Beta. In a favored embodiment the alkanol feedstock comprises dry methanol and wherein said alkane and alkene comprises $C_4+$ hydrocarbons. Typically the alkyl tertiary-butyl ether comprises methyl tertiary butyl ether and the etherification catalyst is an acidic zeolite or a sulfonated vinyl aromatic resin.

The integrated process thus converts paraffins contained in the light hydrocarbon feedstream of a process for the production of tertiary alkyl ether from alkanol and iso-olefins, and thus provides for the utilization of $C_3+$ hydrocarbon feedstream for the production of tertiary alkyl ethers and the conversion of $C_3$ paraffins and olefins to higher hydrocarbons. Paraffin conversion is accomplished by carrying out the conversion of unreacted alkanol and $C_4-$ hydrocarbon from the etherification step in a high pressure reactor containing high activity zeolite. The conversion of paraffin is accomplished without the production of significant quantities of $C_2$-hydrocarbons. High octane gasoline is produced in the process and all components of an LPG feed are efficiently utilized.

From another aspect, a continuous process for converting lower aliphatic alkanol feedstock and $C_3+$ alkane and alkene feedstock to alkyl tertiary-alkyl ethers and $C_5+$ gasoline boiling range hydrocarbons comprises: contacting alkanol and a $C_3+$ aliphatic hydrocarbon stream rich in iso-olefins under iso-olefin etherification conditions in an etherification reaction zone containing acid etherification catalyst; separating the etherification effluent to recover a vapor stream comprising unreacted alkanol plus $C_3$-$C_4$ aliphatic hydrocarbons and a liquid product stream containing $C_5+$ alkyl tertiary-alkyl ether; and contacting the vapor stream with acidic, medium pore metallosilicate catalyst under conversion conditions sufficient to convert alkanol, alkane and alkene to higher hydrocarbon with no substantial formation of methane, said conditions comprising a temperature of about 200°C to 400°C and a pressure above about 3400 kPa, and recovering $C_5+$ gasoline boiling range hydrocarbons.

In another embodiment of the invention the vapor stream is contacted with acidic, medium pore metallosilicate catalyst under low to moderate pressure alkanol and hydrocarbon conversion conditions, separated and a stream comprising $C_5+$ gasoline boiling range hydrocarbons and a stream containing unreacted $C_3$-$C_4$ hydrocarbons recovered. The $C_3$-$C_4$ hydrocarbon stream is also contacted with acidic, medium pore metallosilicate catalyst under conversion conditions sufficient to convert alkane and alkene to higher hydrocarbon with no substantial formation of methane as described above.

Description of the Figures

Figure 1 is a schematic diagram of the present invention integrating etherification and high pressure conversion of alkanol and hydrocarbon.

Figure 2 is a schematic diagram of the present invention integrating etherification, low to moderate pressure conversion of alkanol and hydrocarbon and high pressure conversion of hydrocarbon.

Typical feedstock materials for etherification reactions according to the present invention include olefinic streams, such as FCC light cracked gas containing butene isomers, often in mixture with substantial amounts of propene, propane, n-butane and isobutane. The $C_4$ components usually contain a major amount of unsaturated compounds, such as 10-35% isobutylene, 20-55% linear butenes, and small amounts of butadiene. Also, $C_4+$ heavier olefinic hydrocarbon streams may be used, particularly mixtures of isobutylene and isoamylene. Feedstock includes light alkane and alkene hydrocarbons including $C_3+$ hydrocarbons, $C_4$s or $C_4+$ hydrocarbons. These aliphatic streams are produced in a variety of petroleum refinery operations such as catalytic cracking of gas oil or the like. The isoalkenes are those having the formula $R_2C=CH_2$ or $R_2C=CHR$.

Suitable alkanols include lower aliphatic $C_1$-$C_4$ primary or secondary alcohols. When dry methanol is employed it is preferably of 99.8 wt% purity. Alkanols which may be used in the present invention include methanol, ethanol, 1-propanol, isopropanol, 1-butanol and 2-butanol.

The reaction of methanol with isobutylene and isoamylenes at moderate conditions with a resin catalyst is known, for instance from R.W. Reynolds, et al, The Oil and Gas Journal, June 16, 1975; S, Pecci and T. Floris, Hydrocarbon Processing, December 1977; and the aforesaid Chase reference. Preferred catalysts are polymeric sulfonic acid exchange resin such as Amberlyst 15. Zeolites such as zeolite Beta and ZSM-5 may be used.

In the etherification process alkanol and iso-olefins may be reacted in equimolar quantities, or either reactant may be in molar excess to influence the complete conversion of the other reactant. Because etherification is an incomplete reaction the etherification effluent comprises unreacted alkanol and unreacted hydrocarbons. Equimolar quantities of methanol and iso-olefins are advantageous, but an excess between 2 and 200% of either component can be employed. According to the present invention the molar ratio of alkanol to iso-olefin, such as methanol to iso-butylene, is advantageously between 0.7 and 2, preferably unity when the reactants are actually methanol and isobutylene. An excess of methanol of 40% or more when the hydrocarbon feedstream comprises significant quantity of isoamylenes may advantageously be employed, but equimolar quantities are preferred when the hydrocarbon feedstream consists essentially of $C_4$ hydrocarbons.

It is advantageous to convert substantially the entire stream of unreacted alcohol and light olefinic components recovered from etherification effluent by acid zeolite catalysis, thus providing a once-through process without expensive alcohol recycle to the etherification unit. The alcohol-containing stream, preferably a vapor stream, may be co-reacted with olefinic light gas and/or other reactive hydrocarbon feedstreams in an oligomerization/aromatization reaction section, as described in US-A-4,547,616, 4,746,762, 4,827,046 and 4,831,203. Zeolite conversion technology for upgrading lower aliphatic hydrocarbons and oxygenates ($C_2$-$C_5$ alcohols, ethers, aldehydes, esters and the like) to liquid hydrocarbon products, including gasoline boiling range hydrocarbons and aromatics, are well known. Commercial Methanol-to-Gasoline (MTG), methanol-to-olefins (MTO), Mobil Olefin to Gasoline/Distillate (MOG/D) and conversion of olefins and paraffins to aromatics (M-2 Forming) processes employ shape selective medium pore zeolite catalysts. The zeolite conversion unit operation of the present invention can have the characteristics of these catalysts and processes to produce a variety of hydrocarbon products, especially liquid aliphatics and aromatics in the $C_5$-$C_9$ gasoline range. The zeolite catalyzed conversion processes can be run in fixed, fluidized or moving catalyst beds.

The reactions which take place in the zeolite conversion reactor include oligomerization, alkylation, dehydrocyclization, isomerization, and cracking. These include exothermic and endothermic reactions, which can be thermally balanced to require little or no heat exchange to maintain process reaction temperature. Mixed hydrocarbons from FCC operations, following the etherification and effluent separation, can be selected or modified to include a balance of olefins and paraffins to achieve the desired thermodynamic properties.

Under conditions of high pressure $C_3$ and $C_4$ paraffins are converted to higher hydrocarbons in contact with zeolite catalyst. As disclosed in US-A-4,754,100 propane when mixed with a controlled amount of mono-olefin is effectively converted with unexpectedly high selectivity to a mixture rich in normal butane, isobutane, pentanes and $C_6$+ aliphatics by contact under a specific set of operating conditions with certain intermediate pore size acid zeolites. In particular, this process provides for the production of $C_4$+ hydrocarbons from a mixture of propane and an amount of lower molecular weight mono-olefin sufficient to increase reaction rate for propane. The preferred process comprises contacting, preferably in the absence of added hydrogen and at a pressure above about 3400 kPa, a feed consisting essentially of propane and a mono-olefin with a catalyst comprising a crystalline alumino-silicate zeolite having a silica-to-alumina ratio of at least 12 and a Constraint Index of 1 to 12, the process reaction being conducted under a combination of conditions of temperature, pressure, and space velocity effective to convert at least 10% of the propane to a mixture of hydrocarbons that contain butanes in an amount equal to at least 35 wt% of the converted propane.

It has also been found that n-butane is converted directly to propane and gasoline and with no substantial formation of methane by contact with certain intermediate pore size zeolites such as high activity HZSM-5 or zeolite Beta under specified conversion conditions including a relatively low temperature of not more than 800°F (427°C) and a pressure of at least 2100 kPa. In particular, this process provides a simple catalytic process for the production of propane and gasoline by contacting in the absence of added hydrogen at a temperature of 475°F to about 800°F (427°C) and at a pressure of 600 (4200 kPa) to about 2000 psig (14,000 kPa) a feed consisting essentially of n-butane or isobutane with a catalyst comprising a crystalline zeolite having a silica-to-alumina ratio of at least 12 and a Constraint Index of 1 to 12, said contacting being conducted under a combination of conditions of temperature, pressure, and WHSV effective to convert about 35 wt% to about 90 wt% of the butane to a mixture of propane and heavier hydrocarbons, with no substantial conversion to hydrocarbon by-products having less than three carbon atoms. Propane and gasoline are readily recovered from the reaction mixture. The total effluent from the catalytic reactor will contain unreacted normal butane and isobutane. The normal butane is preferably recovered and recycled to the process of this invention.

Recent developments in zeolite technology have provided a group of medium pore siliceous materials having similar behavioral characteristics. Most prominent among these is zeolite ZSM-5, which is usually synthesized with Bronsted acid active sites by incorporating a tetrahedrally coordinated metal, such as Al, Ga, Fe or mixtures thereof, within the zeolitic framework. These medium pore zeolites are favored for acid catalysis; however, the advantages of ZSM-5 structures may be utilized by employing highly siliceous materials or crystalline metallosilicate having one or more tetrahedral species having varying degrees of acidity. The ZSM-5 structure is readily recognized by its x-ray diffraction pattern, for instance as set forth in US-A-3,702,866.

Zeolite hydrocarbon upgrading catalysts preferred for use herein include the medium pore (i.e. about 5-7A) shape-selective crystalline aluminosilicate zeolites having a silica-to-alumina ratio of at least 12, a Constraint Index of about 1 to 12 and acid cracking activity (alpha value) of about 1-250, preferably about 3 to 80. In a fluidized bed reactor the coked catalyst preferably has an apparent activity (alpha value) of about 1 to 20 under the process conditions to achieve the required degree of reaction severity. Suitable medium pore shape selective zeolites are ZSM-5, ZSM-11, ZSM-12, ZSM-23, ZSM-35 and ZSM-48, disclosed inter alia in US-A-3,709,979, 3,832,449, 4,076,979, 3,832,449, 4,076,842, 4,016,245, 4,414,423, 4,417,086, 4,517,396 and 4,542,251. While suitable zeolites having a silica to alumina (or other metal oxide) molar ratio of 12:1 to 200:1 or higher may be used, it is advantageous to employ ZSM-5 having a silica alumina molar ratio of about 25:1 to 70:1, suitably modified if desired to adjust acidity and oligomerization/aromatization characteristics. A typical zeolite catalyst component having Bronsted acid sites may consist essentially of aluminosilicate ZSM-5 zeolite.

In addition to the preferred aluminosilicates, gallosilicate or ferrosilicate materials may be employed. Pentasil zeolites are particularly useful in the process because of their regenerability, long life and stability under the extreme conditions of operation. Usually the zeolite has a crystal size from about 0.01 to 2 micrometers, but the crystals may be larger. In order to obtain the desired particle size for fluidization in a turbulent regime, the crystals are bound with a suitable inorganic oxide, such as silica, alumina, etc. to provide a zeolite concentration of about 5 to 95 wt%. It is advantageous to employ ZSM-5 having a silica:alumina molar ratio of 25:1 or greater in a once-through fluidized bed unit to convert 60 to 100 percent, preferably at least 75 wt%, or the monoalkenes and methanol in a single pass. In the preferred embodiment 25% H-ZSM-5 catalyst calcined with 75% silica-alumina matrix binder is employed. Also preferred as catalyst in the present invention is zeolite Beta.

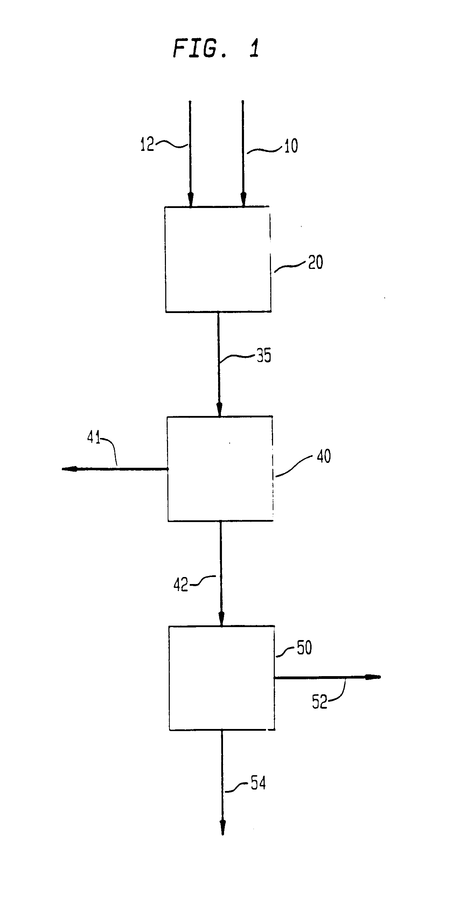

The integration of the foregoing processes is carried out in the present invention to provide a process utilizing $C_3 +$ hydrocarbons, such as LPG, as the feedstream for etherification and production of $C_5 +$ gasoline. Referring to Figure 1, a continuous stream of $C_3 +$ olefinic and paraffinic hydrocarbon is introduced via conduit 10 to a first reactor 20 and mixed with dry methanol (MeOH) feedstock introduced via conduit 12. The combined streams are pressurized to about 1190 kPa (170 psig) and heated to a temperature of about 55°C (130°F) for conversion of methanol in contact with acid etherification catalyst, preferably solid polysulfonic acid resin such as sulfonated vinyl aromatic resins.

The reactor effluent stream containing MTBE, methanol and unreacted light hydrocarbons is preheated and fed 35 to debutanizer fractionation tower 40. In separation unit 40 the $C_5 +$ methyl tert-alkyl ether product is recovered 41 as a liquid product, along with byproduct dimer or other heavier hydrocarbons in the effluent. Tower overhead product comprising unreacted $C_4$- light hydrocarbons and methanol is passed to upgrading reactor 50 as a liquid via conduit 42 by pumping after condensing or the vapor is compressed and fed to the reactor. In the zeolite catalytic conversion unit 50, under pressure above 3400 kPa, $C_4$- paraffins, olefins and methanol are converted to higher hydrocarbons. Effluent may be fractionated in a debutanizer to recover a gasoline product stream 52, and $C_4$- hydrocarbons 54. Preferably, unreacted $C_3$-$C_4$s can be recycled to reaction zone 50. In this case, the entire reactor effluent can then be recycled to the debutanizer 40 to recycle LPG to essentially extinction; a minor off-gas purge stream from debutanizer 40 overhead drum may be required to remove $C_2$-from the system.

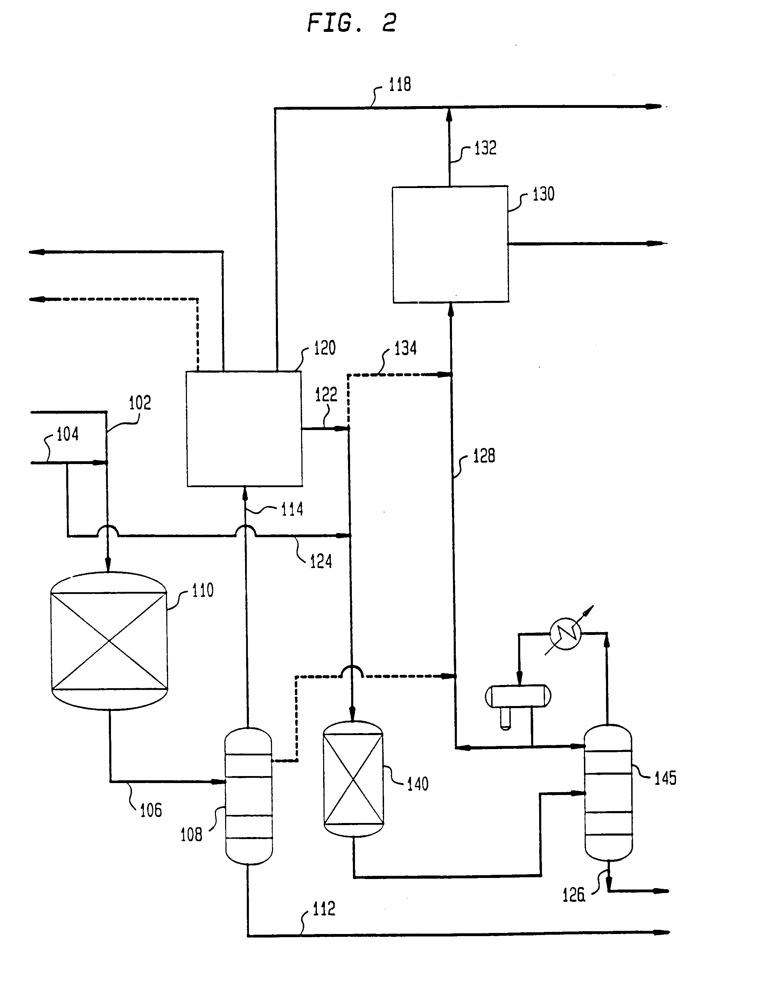

In another embodiment of the present invention the principal processes of etherification and high pressure conversion of unreacted hydrocarbons may be combined with low severity zeolite catalyzed conversion to provide a process that converts a major portion of alkenes and alkanes in the hydrocarbon feedstream to gasoline components. This combination is illustrated in Figure 2.

Referring now to Figure 2, the major conversion processes are carried out in etherification reactor 110, low to moderate pressure alkanol and olefin conversion reactor 120 and high pressure $C_3$-$C_4$ paraffin conversion reactor 130. A $C_3 +$ iso-olefin rich hydrocarbon stream 102 is combined with alkanol feedstream 104, e.g, methanol or isopropanol, and passed to the etherification reactor where etherification of iso-olefins is carried out in contact with acidic catalyst. The effluent from the etherification reaction is passed via conduit 106 to debutanizer 108. From the debutanizer a liquid stream 112 is separated comprising $C_5 +$ gasoline rich in alkyl tertiary alkyl ether, such as MTBE. The overhead vapor stream 114 from the debutanizer is passed to the zeolite conversion zone 120 wherein unreacted alkanol and olefins in the vapor stream are converted to higher hydrocarbons at a temperature of about 325°C and 925 kPa. From the conversion zone 120 a $C_5 +$ gasoline stream 118 is recovered. The $C_4$- stream 122 from the low severity conversion zone containing paraffins and olefins is passed to a second etherification zone 140 in conjunction with a stream 124 comprising additional alkanol feedstock. The conversion of olefins in zone 120 is not complete and leaves some $C_3$-$C_4$ olefins in the effluent to enhance propane conversion in the high pressure reactor. The product from the second etherification zone is separated in a second debutanizer 145 to provide a second ether rich gasoline stream 126 a vapor stream 128 containing unreacted alkanol and $C_4$- hydrocarbons. These are converted in high pressure zeolite conversion zone 130 to $C_5$ + gasoline 132.

Optionally, stream 122 may be passed directly via conduit 134 to conversion zone 130 for conversion of paraffins and olefins to higher hydrocarbon without carrying out the second etherification step.

The effluent from high pressure reactor 130 may also be fractionated in the fractionation system for zone 120, or $C_5$ + or $C_6$ + hydrocarbons leaving the high pressure system can be passed to the lower pressure 120 reactor to improve the product octane.

## Claims

1. A continuous process for converting a feedstock, comprising lower aliphatic alkanol and $C_3$ +, $C_4$ or $C_4$ + aliphatic hydrocarbon containing alkane and alkene and rich in isoolefins, to alkyl tertiary-alkyl ethers and $C_5$ + gasoline boiling range hydrocarbons, comprising: contacting the alkanol and the aliphatic hydrocarbon under etherification conditions with an acid etherification catalyst to produce an etherification effluent comprising an overhead stream containing unreacted alkanol and $C_4$-aliphatic hydrocarbons and a liquid product stream containing $C_5$ + alkyl tertiary-alkyl ether; and subjecting said overhead stream to high severity contacting with acidic, medium pore metallosilicate catalyst at a temperature of 200 to 427°C and a pressure above 3400 kPa, to convert alkanol, alkane and alkene therein to $C_5$ + gasoline boiling range hydrocarbons with no substantial formation of methane.

2. A process according to claim 1 wherein said overhead stream is subjected to a preliminary low severity contacting with acidic, medium pore metallosilicate catalyst to produce $C_5$ + gasoline boiling range hydrocarbons and unreacted $C_4$- aliphatic hydrocarbons which latter are then subjected to said high severity contacting.

3. A process according to claim 1 wherein said overhead stream is subjected to a preliminary low severity contacting with acidic, medium pore metallosilicate catalyst to produce $C_5$ + gasoline boiling range hydrocarbons and unreacted $C_4$- aliphatic hydrocarbons which latter, together with further lower aliphatic alkanol, are contacted with a further acid etherification catalyst under etherification conditions to provide a further liquid product stream containing $C_5$ + alkyl tertiary-alkyl ether and an overhead stream containing unreacted alkanol and $C_4$-aliphatic hydrocarbons which is subjected to said high severity contacting.

4. A process according to claim 1 wherein the high severity contacting is carried out at a temperature of 200°C to 370°C and a weight hourly space velocity of 0.1 to 30 and in the essential absence of hydrogen.

5. A process according to claim 2 or claim 3 wherein the high severity contacting is carried out at a temperature of 200°C to 427°C.

6. A process according to any preceding claim wherein said lower aliphatic alkanol comprises methanol, ethanol, 1-propanol, isopropanol, 1-butanol and/or 2-butanol.

7. A process according to any preceding claim wherein said medium pore metallosilicate is a zeolite having the structure of ZSM-5 or zeolite Beta.

8. A process according to any preceding claim wherein the alkanol feedstock comprises dry methanol and wherein said alkane and alkene comprises $C_4$ + hydrocarbons.

9. A process according to any preceding claim wherein the alkyl tertiary-butyl ether comprises methyl tertiary butyl ether.

10. A process according to any preceding claim wherein the etherification catalyst is an acidic zeolite or a sulfonated vinyl aromatic resin.

# FIG. 1

# FIG. 2

European
Patent Office

EUROPEAN SEARCH
REPORT

Application Number

EP 91 11 0356

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 320 180 (MOBIL OIL) <br> * page 6, line 4 - line 33; claims * * <br> – – – | 1-10 | C 10 G 3/00 <br> C 10 L 1/02 <br> C 07 C 43/04 |
| D,A | US-A-4 788 365 (M. N. HARANDI) <br> * the whole document * * <br> – – – | 1-10 | C 07 C 41/06 |
| A | WO-A-8 911 463 (MOBIL OIL) <br> * page 8, line 31 - page 9, line 4; claims * * <br> – – – | 1-10 | |
| A | US-A-4 830 635 (M. N. HARANDI) <br> * column 6, line 19 - line 51; claims * * <br> – – – | 1-10 | |
| A | EP-A-0 302 581 (MOBIL OIL) <br> * claims * * <br> – – – – – | 1-10 | |

|  |
|---|
| TECHNICAL FIELDS SEARCHED (Int. Cl.5) |
| C 10 G <br> C 10 L <br> C 07 C |

**The present search report has been drawn up for all claims**

| Place of search | Date of completion of search | Examiner |
|---|---|---|
| The Hague | 08 November 91 | WRIGHT M.W. |